# EUROPEAN PATENT SPECIFICATION

(11) **EP 1 566 026 B1**
(45) Date of publication and mention of the grant of the patent: **13.01.2010**
(21) Application number: 03783788.7
(22) Date of filing: 26.11.2003
(51) Int. Cl.: H04L 12/56, H04N 7/173

(54) **APPARATUS AND METHOD FOR DYNAMIC CHANNEL MAPPING AND OPTIMIZED SCHEDULING OF DATA PACKETS**
VORRICHTUNG UND VERFAHREN ZUR DYNAMISCHEN KANALABBILDUNG UND OPTIMIERTEN EINTEILUNG VON DATENPAKETEN
DISPOSITIF ET PROCEDE DE MISE EN CORRESPONDANCE DYNAMIQUE DE CANAUX ET D'ORDONNANCEMENT OPTIMISE DE PAQUETS DE DONNEES

(30) Priority: 27.11.2002 US 429727 P
(43) Date of publication of application: 24.08.2005
(60) Divisional application: 09169641.9
(73) Proprietor: RGB Networks, Inc., Sunnyvale, CA 94089 (US)
(72) Inventor: KRAUSE, Edward, Saratoga, CA 95070 (US); MONTA, Peter, Palo Alto, CA 94304 (US); TOM, Adam, San Francisco, CA 94110 (US)
(74) Representative: Hoeger, Stellrecht & Partner Patentanwälte
(86) International application number: PCT/US2003/037840
(87) International publication number: WO 2004/051906

(56) References cited:
- WO-A-97/35410
- WO-A2-02/01781
- US-A- 5 455 825
- US-A- 5 455 825
- US-A- 5 828 655
- US-A- 5 938 734
- US-A- 5 956 321
- US-A- 6 028 847
- US-A- 6 091 709
- US-A1- 2001 038 640
- US-B1- 6 469 982
- US-B1- 6 570 883
- US-B1- 6 643 298
- PICKER D ED - INSTITUTE OF ELECTRICAL AND ELECTRONICS ENGINEERS: "Design considerations for a hybrid fiber coax high-speed data access network" DIGEST OF PAPERS OF COMPCON (COMPUTER SOCIETY CONFERENCE) 1996 TECHNOLOGIES FOR THE INFORMATION SUPERHIGHWAY. SANTA CLARA, FEB. 25 - 28, 1996, DIGEST OF PAPERS OF THE COMPUTER SOCIETY COMPUTER CONFERENCE COMPCON, LOS ALAMITOS, IEEE COMP. SOC. PRESS,, vol. CONF. 41, 25 February 1996 (1996-02-25), pages 45-50, XP010160873 ISBN: 0-8186-7414-8
- KAROL M J ET AL: "TIME-FREQUENCY-CODE SLICING: EFFICIENTLY ALLOCATING THE COMMUNICATIONS SPECTRUM TO MULTIRATE USERS" IEEE TRANSACTIONS ON VEHICULAR TECHNOLOGY, IEEE SERVICE CENTER, PISCATAWAY, NJ, US, vol. 46, no. 4, 1 November 1997 (1997-11-01), pages 818-826, XP000754819 ISSN: 0018-9545

## Description

### BRIEF DESCRIPTION OF THE INVENTION

This invention relates generally to signal processing. More particularly, this invention relates to a technique for dynamic channel mapping and optimized scheduling of data packets, such as video and audio packets.

### BACKGROUND OF THE INTENTION

WO 97/35410 A1 discloses a method for allocating bandwidth in a layered data communication network in which a plurality of subscriber units communicate with a central controller.

The article "Design Considerations for a Hybrid fiber Coax High-Speed Data Access Network" of D. Picker, DIGEST OF PAPERS OF COMPCON (COMPUTER SOCIETY CONFERENCE) 1996 TECHNOLOGIES FOR THE INFORMATION SUPERHIGHWAY. SANTA CLARA, FEB. 25 - 28, 1996, DIGEST OF PAPERS OF THE COMPUTER SOCIETY COMPUTER CONFERENCE COMPCON, LOS ALAMITOS, IEEE COMP. SOC. PRESS" vol. CONF. 41, 25 February 1996 (1996-02-25), pages 45-50, ISBN: 0-8186-7414-8 describes hybrid fiber coax technology providing a transmission medium allowing the implementation of high speed data access networks that can be deployed on a large scale to serve residential and business sites.

The article "TIME-FREQUENCY-CODE SLICING: EFFICIENTLY ALLOCATING THE COMMUNICATIONS SPECTRUM TO MULTIRATE USERS" IEEE TRANSACTIONS ON VEHIGULAR TECHNOLOGY, IEEE SERVICE CENTER, PISCATAWAY, NJ, US, vol. 46, no. 4, 1 November 1997 (1997-11-01), pages 818-826, ISSN: 0018-9545 of Karol M. et al, describes a time-frequency-code slicing technique allowing multiple users with different data-rate requirements access to a communications resource in a manner that is cost effective over a wide range of access rates.

There are a number of limitations associated with conventional signal processing techniques. For example, existing packet scheduling algorithms are generally computationally expensive or not optimized for real-time signals, such as video and audio. Another limitation of traditional signal processing is that signals including video, audio, and/or data packets are statically assigned to a fixed number of communication channels, such as a fixed number of radio-frequency ("RF") channels. This limitation can be problematic if the data rate of one or more of the signals is variable and can thus change over time. At any given time, therefore, one or more RF channels may be over-utilized and unable to accommodate all of the waiting packets, while other RF channels may be underutilized and have excess bandwidth. This results not only in wasted bandwidth but can also lead to lost packets and interruptions in the playback of real-time video and/or audio services, as well as excessive delays while waiting for data on other non-real-time services.

In view of the foregoing, it is desirable to improve the efficiency of packet scheduling processes for real-time signals, such as video and audio signals, while reducing computational overhead and reducing bandwidth utilization within communication channels by effectively distributing traffic across a variety of communication channels.

### SUMMARY OF THE INVENTION

According to one embodiment of the invention, an exemplary method combines a set of digital streams into a set of digital multiplexes. A digital multiplex can refer to a signal that includes two or more multiplexed video, audio and/or data streams. The method includes identifying a first communication channel accepting packets at, for example, a rate that is nearing, or beginning to exceed, the nominal capacity of the channel.
Such packets can include audio packets, video packets, data packets or the like, and can be sequenced and timed for continuous real-time presentation. The term "data packets," as described herein, is generally used to describe packets that include data that does not represent either real-time audio or real-time video. A second communication channel accepting packets at a rate that is less than the nominal capacity of the channel is also identified. One or more of the streams that comprise the multiplex assigned to the first communication channel are selected to form selected streams. The packets of the selected streams can be reassigned from a multiplex corresponding to the first communication channel to a multiplex corresponding to the second communication channel. In some embodiments, any receivers of one or more of the selected streams are instructed to, for example, retune from the frequency corresponding to the first communication channel to the frequency corresponding to the second communication channel.

According to another embodiment of the invention, an exemplary method can combine a plurality of digital streams into a digital multiplex where received packets are stored in memory. For one or more real-time stream of packets each containing real-time data, a deadline for an arrival of a next packet (e.g., at the receiver) is determined, and a priority based on, for example, a time interval before the deadline occurs. For one or more non-real time stream of packets each containing non real-time data, a priority can be based on, for example, the time that the next packet was stored in the memory, any pre-existing quality-of-service constraints, or the like. Examples of non-real time streams include e-mail, HTTP data, file transfers and the like. In some embodiments, one or more streams can be excluded from consideration if the next packet cannot be transmitted without overflowing any buffer that would be used to receive the packet, such as at a receiver. The stream with a highest priority, and which has not been excluded from consideration, for example, can be identified to transmit packets. The next packet corresponding to this identified stream can be selected by retrieving it from memory and appending it to the data stream which comprises the digital multiplex.

### BRIEF DESCRIPTION OF THE FIGURES

The invention is more fully appreciated in connection with the following detailed description taken in conjunction with the accompanying drawings, in which:

Figure 1 illustrates a cable distribution system implementing features of the invention.

Figure 2 illustrates a cable modem termination system that may be utilized in accordance with an embodiment of the invention.

Figure 3 illustrates an exemplary packet read/write mechanism that can be utilized in a cable modem termination system, according to a specific embodiment of the invention.

Figure 4 illustrates an exemplary read address generator in accordance with an embodiment of the invention.

Figure 5 illustrates exemplary packet classifier operations performed in accordance with an embodiment of the invention.

Figure 6 illustrates packet scheduler operations performed in response to an interrupt in accordance with an embodiment of the invention.

Figure 7 illustrates exemplary sorting operations performed by a packet scheduler configured in accordance with an embodiment of the invention.

Figure 8 illustrates an exemplary priority conversion module utilized with a packet scheduler in accordance with an embodiment of the invention.

Figures 9A-9B illustrate priority conversion mapping functions that can be utilized in accordance with various embodiments of the invention.

Figure 10 illustrates an exemplary method of operating an RF channel controller in accordance with an embodiment of the invention.
Like reference numerals refer to corresponding parts throughout the several views of the drawings.

### DETAILED DESCRIPTION OF THE INVENTION

The present invention provides an apparatus and a method for scheduling the transmission of packets over one or more communication channels. Such packets that include data representing video and audio are herein referred to as video and audio packets, respectively. However, packets that include data representing anything other than either real-time audio or real-time video are herein referred to as "data" packets. According to one embodiment, an exemplary scheduling method examines whether a packet (and consequently a stream of packets) includes data that is considered either real-time or non real-time. A particular stream is then generally selected by determining its priority based on techniques of the present invention. For example, the priority can be determined based on time, such as a deadline, a constraint similar to that of routing policies, such as a quality of service ("QoS") constraint, or the like. An exemplary apparatus for performing at least a portion of one of the scheduling methods of the present invention is a cable modem termination system module, such as a channel formatter. The present invention also provides an apparatus and a method for dynamically changing the communication channel over which one or more digital streams flow, especially if the communication channel is in danger of being subjected to an unacceptable loss of packets. For example, an exemplary method can first monitor whether a particular stream is associated with potentially overflowing buffers, and second, can take corrective action to control the loss of packets.

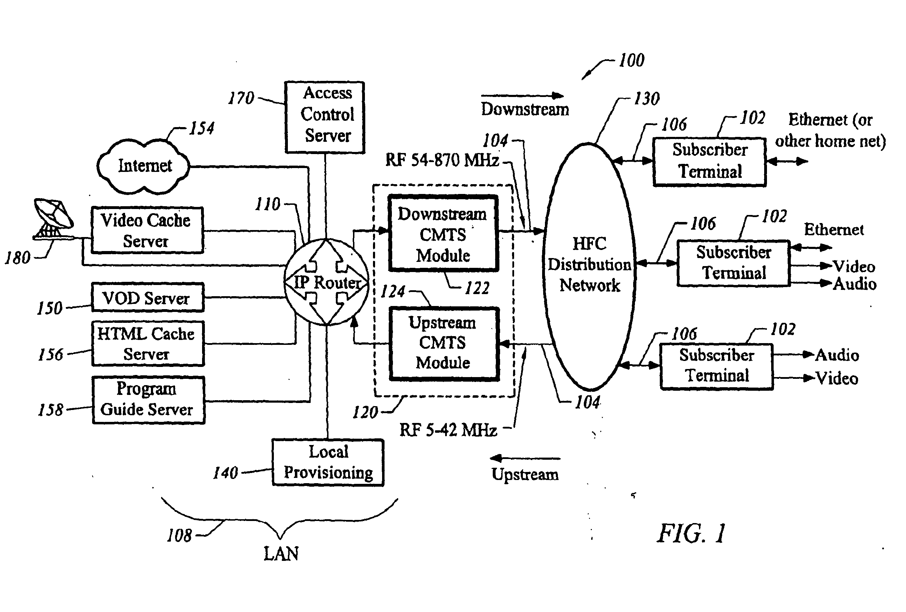

A high-level block diagram of an exemplary cable distribution system 100 is shown in Figure 1, where system 100 includes an apparatus in accordance with a specific embodiment of the present invention. Subscriber Terminal 102 processes data, and can include a cable modem, a digital or analog video/audio set-top decoder, a combined cable-modem / set-top hybrid decoder, a personal computing device or any other like device. The subscriber terminals 102 are typically linked to the cable head end by a Hybrid-Fiber-Coax ("HFC") distribution system 130, generally including predominantly fiber nearer to the head-end site and predominantly coax cable 106 closer to the home.

In this example, a Local Area Network ("LAN") 108 is used to interconnect the various devices accessible at the head end. One or more high-speed switches or routers 110 can interconnect devices associated with LAN 108. Ethernet Internet Protocol ("IP") routing devices are commonly available and can be configured to match the size, scale, and throughput requirements of a particular head end system.

An exemplary cable modem termination system ("CMTS") generally includes downstream and upstream components that are used to interface switch or router 110 (or any other suitable network device of similar functionality) to the Hybrid Fiber-Coax ("HFC") distribution network 130. A downstream CMTS module 122 is designed to format video, audio, and non real-time data for transmission over HFC network 130 to subscriber terminals 102. Although "video" and "audio" is represented as data, the term "non real-time data" as is used in the last sentence can be used to describe data generally, such as the data constituting an email, the results of browsing a web page, control information, etc., which need not be delivered in real-time or in accordance with a pre-determined rate. Although in some cases where non real-time data is time-sensitive, a deadline for delivery typically does not exist.

Upstream CMTS module 124 receives data representing non real-time data, audio and/or video from subscriber terminals 102 and reformats the data for distribution. It should be noted that the downstream and upstream modules can typically be combined into a single CMTS unit 120, which is primarily used to convey IP data between a Wide Area Network ("WAN") and a plurality of cable modems installed within the subscriber's homes for the purpose of connecting personal computing devices to the internet. Alternative hardware can be used to broadcast video to the subscriber's television sets and audio to the subscribers' radios or telephone handsets as an example. In the future, more and more content formats will become unified and transmitted to the home or business over a common distribution network. Although CMTS 120 can deliver such unified signals, this invention is not limited to the use of a CMTS 120. The implementation outlined in Figure 1 is merely one specific embodiment of the invention. In this particular embodiment, the Local Provisioning Unit 140 can handle some of the high-level network control services of the CMTS 120. Such services can be used to initialize the cable modem receivers, optimize channel performance, and to implement file and message transfer protocols, etc.

Several exemplary sources of content suitable to practice the invention are included in the example of Figure 1. The Video-on-Demand ("VOD") server 150 stores movies, advertisements, or other video programming for on-demand delivery to the subscriber's television. Further, the VOD server 150 enables interactive playback features such as pause, fast or slow forward, reverse play, random access, and the like.

The video cache server 152 receives and stores live video content from any one of many sources 180, such as from satellite, and enables on-demand delivery to a subscriber with similar interactive capabilities. Interfacing one or more ports of the switch or router to a suitable Internet gateway device enables access to the Internet 154. HTML cache server 156 can store frequently accessed Internet web pages to increase access speed to these selected pages. This can also reduce the amount of repetitive traffic over the Internet interface. Program guides can be stored in an HTML format in Program Guide Server 158 for delivery to subscriber terminal 102. An Access Control Server 170 maintains records of the authorization rights associated with each subscriber, updates billing records, and emits entitlement and control messages so that the subscriber's decoding terminal can selectively descramble video and audio programming.

In one embodiment of the invention, a downstream channel processor, such as downstream CMTS module 122, is configured to prioritize and/or manage video, audio and data packets. Information that is received from the upstream channels can be similarly processed by an upstream CMTS module 124. Information in the upstream path generally originates from the various subscriber terminals 102 and may include Internet data, voice or video messages, or signals used to interactively control the playback of multimedia content that is streamed to the television, radio, or any other viewing or listening device. The processing of such signals generally involves filtering, converting signals from analog to digital, demodulation, error detection and error correction, and/or decryption.

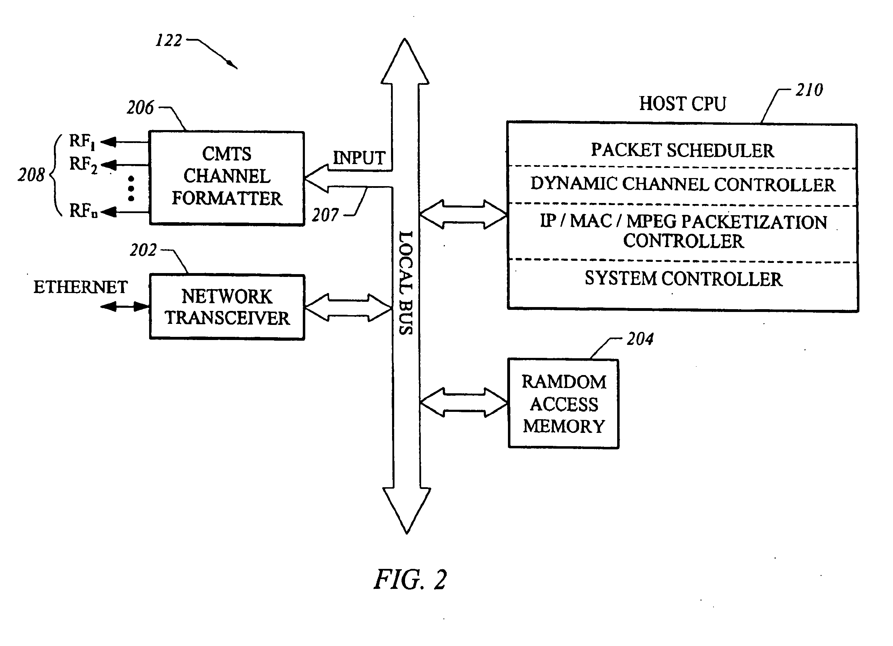

An exemplary block diagram of the downstream CMTS module 122 is shown in Figure 2. Content is received from the local head end network (e.g., from an Ethernet network) by the network transceiver 202 and forwarded to the random access memory unit ("RAM") 204, or any other type of storage or memory known in the art. The content is subsequently retrieved from RAM 204 and processed by the CMTS channel formatter 206. CMTS channel formatter 206 prepares the content for transmission via the HFC network 130 of Figure 1. A host CPU 210 can be configured to process tasks for CMTS systems based on the Data Over Cable Service Interface Specifications ("DOCSIS") or other like standards. Further host CPU 210 can include processes for packetization, both at the Media Access Control ("MAC") and Downstream Transmission Convergence layers, scrambling, data interleaving and randomization, block and trellis coding for error control, modulation, and other similar communications processes.

As is shown in Figure 2, a signal at the output of the CMTS channel formatter can include one or more RF output channels 208 (i.e., either just RF1, or RF1, RF2, ... RFn). Packets received at the input 207 of the CMTS channel formatter can include an identifier specifying the particular RF channel to which the packet has been assigned for transmission.

The purpose of the RAM 204 is to allow the incoming data packets to be sorted, prioritized, and allocated to the available downstream RF channels according to a timely schedule. Priorities are assigned such that "real-time" video, and audio packets arrive at the subscriber terminals 102 of Figure 1 before their video and audio decoding units run out of data to decode. By contrast, "non real-time" can be delivered according to other metrics, such as quality-of-service constraints, a best-effort basis, or other types of known metrics.

As for the bandwidth of each RF channel, the total amount of information (i.e., video, audio and/or data) that can be transmitted over each RF channel 208 is determined by, for example, pre-selected modulation and error-coding parameters. Because video and audio streams are frequently compressed using variable bit rate ("VBR") encoding algorithms, and because Internet data streams are usually bursty and therefore also time-varying in nature, it is difficult to adopt a static allocation policy for assigning video, audio, and data streams to a given RF channel 208. Such static assignments can lead to instances where some RF channels are under-utilized with excess bandwidth to spare and other RF channels are over-utilized and unable to accommodate all of the packets that need to be sent.

Since most conventional CMTS systems are not used to deliver real-time video and audio, the result of channel over-utilization is usually not too serious. That is, during such periods of over-utilization, end-users might notice increased delays while accessing the Internet, particularly when signaling protocols, such as TCP, help to detect and enable the retransmission of dropped packets. But such signaling protocols generally do not work well with real-time streams, such as video and audio. Decoding units in the subscriber terminals 102 are designed to decode the compressed data for continuous presentation on a television screen or presentation by an audio reproduction system. If the decoding and presentation processes stop while waiting for a missed video or audio packet to be retransmitted, then the disruption cannot be hidden from the viewer. Delays typically are more severe, with longer recovery times, when more powerful video and audio compression methods are employed.

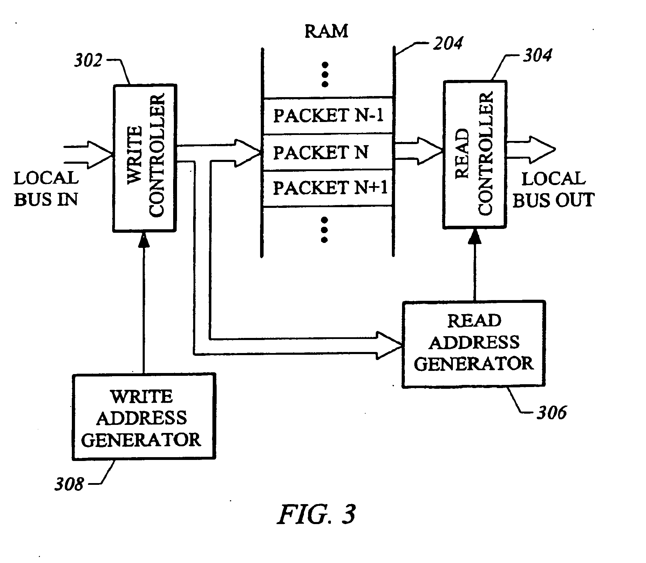

Figure 3 depicts an exemplary process of writing packets received from the network transceiver 202 into the RAM 204 and the process of reading packets from the RAM 204 and forwarding them to the CMTS channel formatter 206, according to one embodiment of the invention. The Write Controller 302 and the Read Controller 304 can be implemented as Direct Memory Access ("DMA") processes using software-generated descriptor lists, for example, wherein each descriptor specifies a source address, a destination address, and the number of bytes to transfer. In this example, Write Controller 302 is designed to assign sequentially increasing addresses. That is, the address for beginning the next transfer is derived by taking the address corresponding to the previous transfer and incrementing it by, for example, an amount equal to the size of the preceding transfer. Write Address Generator 308 provides these addresses. A packet can therefore follow immediately after the end of the preceding packet without any significant gap or space in-between. Upon exceeding a maximum address of the memory unit, the next address for writing can be reset to the starting address of the memory unit. Another implementation can include, for example, a free list to efficiently manage the available memory.

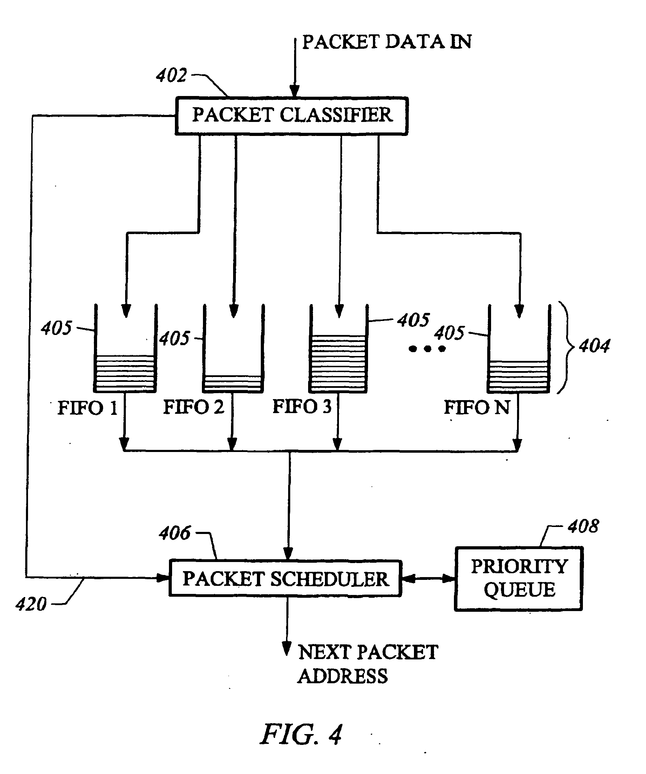

The process of reading packets from the memory unit is typically more complex than the writing process, since this is where the prioritization and scheduling processes are usually realized. In this case, the Read Address Generator 306 can be modeled as shown in Figure 4. The Packet Classifier 402 identifies the stream corresponding to each incoming packet and assigns a priority based on information in the packet headers.

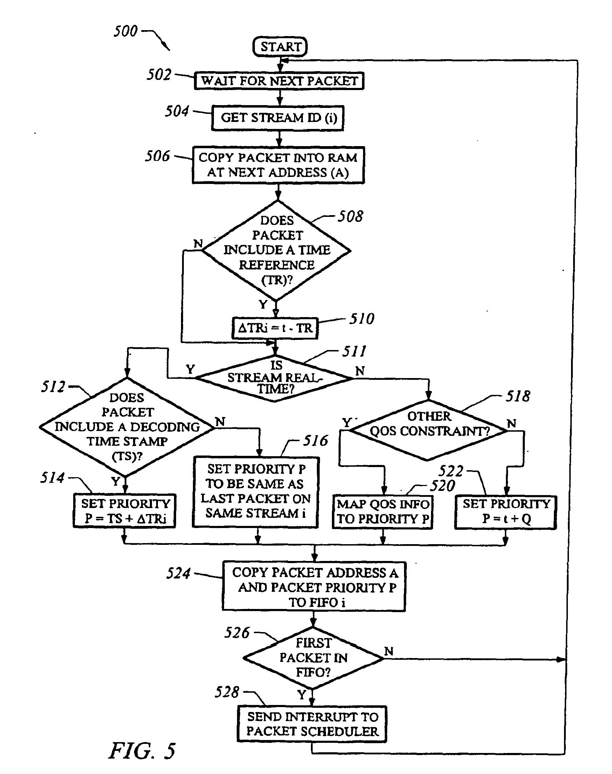

An exemplary Packet Classifier 402 is described by the flowchart in Figure 5, according to one embodiment of the present invention. After receiving the next packet at 502, a corresponding identity for a stream ("stream-id *i*") is determined at 504, and the packet is stored in RAM at 506. A tag is then assigned to represent the packet, the tag comprising the RAM address where the packet is stored, and the packet priority which needs to be determined. One way to determine priorities for real-time video and audio streams is to consider the latest possible time by which the next packet must be delivered to the receiver where the video or audio is to be presented. An Earliest Deadline First-based ("EDF") scheduler, shown implemented in Figure 5, is based on an inverse relationship between this deadline and the priority of the packet.

For real-time video and audio streams, each packet deadline can be uniquely determined. For example, video and audio packets encoded using the MPEG transport stream protocol may include embedded time stamps, usually one for each new "access unit," or "frame." The time stamps specify the time when the packet is to be processed at the receiver. That is, the receiver is to begin decoding the next access unit when the time at the receiver becomes equal to (or is greater than) the time stamp corresponding to that unit. If the entire access unit has not been received and is not present in the buffer of the receiver by this time, then a disruption of the playback process will occur and additional steps will be needed to recover the correct playback synchronization.

This method of timing the playback process works when the receiver is able to synchronize to the clock that was used by the encoder that generated the time stamps.
For this reason, MPEG-encoded transport streams include embedded time reference information, such as program clock references ("PCRs"), which the receiver uses to reconstruct the original clock. Each time reference, which is different than the time stamp, specifies the value of the original clock at the time that the time reference was emitted from the encoder. In over-the-air communication channels, this time is essentially the same as the time that the time reference is received at the receiver. In-between the time reference samples, the clock is continuously extrapolated at the MPEG-specified rate of 27 Mhz. Even though the precise frequency and stability of this local clock generator will depend on the local clock used at the encoder, the receiver should be able to synchronize and recover this original clock with, for example, a phase-locked frequency tracking loop and the time reference parameters embedded in the bit stream.

The Packet Classifier flowchart process in Figure 5 includes a method of converting time stamps detected on different streams to a single common clock reference. When a time reference is detected at 508 in a packet with stream-id i, (as determined at 504), it is used to calculate Δ*TRᵢ* at 510, which is the difference between the "current local time," t, at the receiver (e.g., based on a local 27 Mhz clock) and the value of the time reference.

When a time stamp is detected in a packet at 512 and the corresponding stream-id is "*i*," a new priority for that packet is set equal to the sum of this time stamp and the most recent Δ*TRᵢ* corresponding to this stream at 514. Each time a packet is received without a time stamp at 512, it is assumed to correspond to the same access unit (i.e., same frame) as the previous packet of the same stream, and the priority will therefore remain unchanged at 516. However, it should be noted that some MPEG encoding models do not require that each successive access unit include a time stamp. If such infrequent time stamps are permitted (or for whatever reason a time stamp for a particular packet is not detected), then the access units that do not include time stamps can be assigned an inferred time stamp derived by extrapolating, for example, from a previous time stamp based on the frame rate. The frame rate can also be inferred from information contained in the packet headers.

An alternate exemplary method can be used in flow 500 for prioritizing packets in non-real-time streams (i.e., packets for applications that do not specify a precise rate of presentation), as determined at 511. Examples of such streams are those corresponding to Internet data, or even audio or video that is to be cached for playback at a later time or audio or video that does not require real-time playback at all. In the absence of any externally specified Quality-of-Service ("QOS") constraints, which is tested for at 518, a priority for a packet can be set equal to the current local time, t, increased by the constant *Q* at 522. The value of *Q* can be chosen to provide a suitable balance between the non-real-time traffic and the real-time video and audio. In this way, the non-real-time traffic, if so determined at 511, can be given priority so long as the interval between the current time and the video and audio priority deadlines does not become less than *Q*. However, once the interval becomes less than *Q*, then the priority of the real-time packets becomes greater than the priority of the non-real time packets. This priority advantage for the real-time packets continues until all of the packets of the access unit have been transmitted, and a subsequent change in priority occurs.

In some embodiments, the transmission of non real-time packets, such as those comprising ordinary Internet traffic, may be subject to an existing QOS protocol. To accommodate networking requirements of non-real time packets, it can be desirable to establish a relative priority among the various streams that are not subject to the real-time QOS protocol based on time stamps and time references. Ideally, such alternative QOS constraints can be converted to the same priority scale used to schedule the playback of the real-time video and audio as well as non-real-time streams that do not include QOS constraints. Methods for mapping pre-existing QOS protocols to a common priority scale generally depend on the particular QOS model under consideration. The mapping at 520 need not be rigid or overly precise so long as the relative ordering of the different QOS classes can be properly maintained.

Once a packet has been assigned a priority by the Packet Classifier 402 of Figure 4, it is assigned a tag at 524. This tag is then deposited in a First-In-First-Out memory ("FIFO") 404 associated with the particular stream. The tag includes at least two parameters: the assigned packet priority and the address of the packet in memory (e.g., RAM). Similar FIFOs are maintained for each of the packet streams, each containing a sequence of tags corresponding to the priorities and addresses of the packets that have been received on that stream. Each time a new tag is inserted into a FIFO 404 that was previously empty as determined at 526, an interrupt signal 420 at 528 is sent to the Packet Scheduler 406 of Figure 4.

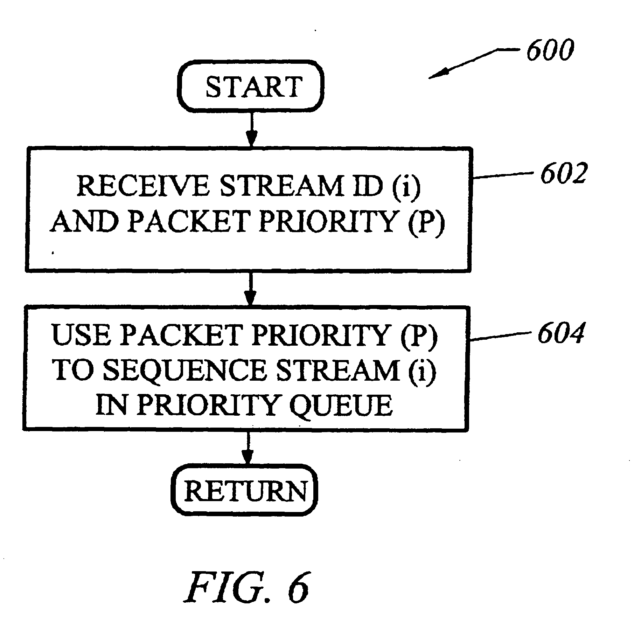

The task of the Packet Scheduler 406 is to continuously monitor the next tag 405 at the output of each FIFO 404 and to sort the various streams according to the priority specified by these next tags. The resulting ordered list is referred to as the Priority Queue 408. A simple flowchart describing exemplary operation of the Packet Scheduler 406 in response to an interrupt 420 is shown in Figure 6. Flow 600 is an example of a process according to an embodiment of the present invention for updating a list of priorities of Priority Queue 408. After Packet Classifier 402 generates an interrupt, a new next tag is present at the output of a FIFO 404 corresponding to the stream associated with the packet that triggered the interrupt. Since the particular FIFO 404 was previously empty (i.e., this packet is first in a FIFO as determined at 526), the stream is not currently listed in the Priority Queue 408, and therefore a new entry must be inserted. At 602, a stream identifier and packet priority are received for the packet. At 604, the Packet Scheduler 406 determines where this new entry should be inserted into the Priority Queue 408 by comparing the priority associated with the new entry with the existing Priority Queue 408 entries.

Since the Priority Queue 408 is sorted according to priority, this process simply involves locating the pair of consecutive entries having priorities that are respectively less than and greater than (or equal to) the priority of the new entry, and inserting the new entry in between this pair. If an entry with higher (or equal) priority does not exist, then the new entry is placed at the front of the Priority Queue 408, and similarly, if an entry with lower priority does not exist, then the new entry is inserted at the end of the Priority Queue 408. Computationally efficient methods for creating and maintaining such sorted lists are well known and therefore will not be discussed in any further detail.

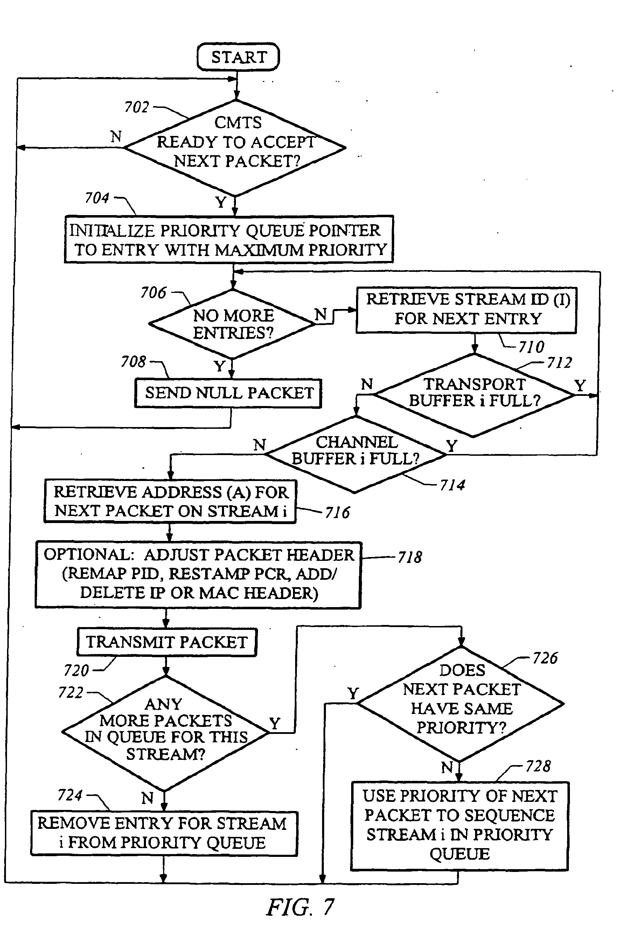

Figure 7 is a flowchart depicting an exemplary method of sorting priorities as performed by Packet Scheduler 406 of Figure 4 in accordance with a specific embodiment of the present invention. Each time a CMTS channel formatter, as an example, is ready to accept a new packet at 702, the Packet Scheduler 406 chooses the next packet corresponding to the highest priority stream at 704 in the Priority Queue 408 and determines whether this packet is suitable for selection. For example, if the transmission of the packet would result in the overflow of one or more buffers used to receive the packet at the receiver, then the packet is deemed not suitable for selection. In the case of MPEG-compliant receivers used to receive MPEG-formatted transport streams, there are generally two buffers that could overflow under certain conditions. The first such buffer is called the transport buffer. A separate transport buffer is maintained for each video, audio, or any other packet type that is to be decoded by a particular receiver. In some embodiments, the size and drain rate of each transport buffer can be in accordance with an MPEG specification, for example, and although practical receiver implementations may not involve transport buffers at all, MPEG compliance requires that the encoding, multiplexing, or re-multiplexing systems insure that such hypothetical buffers do not overflow.

A channel buffer, which receives all of the packets of a single video, audio, or data stream, is another type of buffer that could overflow under certain conditions. Channel buffers are typically larger than transport buffers, particularly in the case of video, but unlike the transport buffers, channel buffers do not have a fixed drain rate. Entire access units are usually removed from the channel buffer at the time instant specified by the corresponding decoding time stamp. As in the case of the transport buffer, the MPEG standards specify the minimum channel buffer size and it is similarly the responsibility of another entity, such as an encoding, multiplexing, or re-multiplexing system, to insure that these buffers do not overflow.

In one embodiment of the invention, the Packet Scheduler 406 first identifies the stream ID at 710 corresponding to the next entry. The Packet Scheduler also maintains a model of both the transport buffer (to determine whether full at 712) and the channel buffer (to determine whether full at 714). As such, the Packet Scheduler 406 can determine, at any given time, whether a buffer has room for one more packet. If not, then the Packet Scheduler 406 must avoid sending the packet, and instead, identify and determine the suitability of the packet having the next-highest priority. If there are no suitable packets at 706, or if the Priority Queue 408 is empty, then a null packet is sent instead at 708. Null packets are described in the MPEG specification.

Once a suitable next packet has been selected at 716 (e.g., by retrieving an address), the packet can either be transmitted as is at 720, or it may be modified at 718 according to the requirements of a particular CMTS implementation. For example, it may be desirable to modify a MPEG packet identification field ("PID"), or to add, delete, or modify IP headers, or to insert or modify DOCSIS MAC headers at 718. As another example, the time references ("PCRs") that were used in the prioritization process can be modified to account for the delay incurred while the packets were waiting in RAM. This delay can be corrected by adding a time reference correction equal to the difference between the receive time and the transmit time of the packets containing time references. This process is known as "PCR re-stamping."

In some embodiments, a fixed negative bias can be added to each time reference to allow more room for maximizing channel throughput via scheduling optimizations. If this is done, then the same bias should be applied as a positive correction to the packet priorities used for scheduling. This is to account for the later deadlines before the packets are to be processed at the receiver. Lastly, regarding time references, an MPEG requirement generally sets a maximum time interval between consecutive PARs that is not to be exceeded. Optimum packet sequencing algorithms could easily result in the violation of this rule. According to another embodiment of the present invention, the Packet Scheduler 406 can prevent this violation by monitoring the interval since the last time reference was transmitted and by inserting additional time references when needed. In this case, Packet Scheduler 406 can avoid realigning the existing packets by generating new packets having PCRs and no payload.

The last task of the Packet Scheduler 406, once a packet has been selected for transmission at 720, is to update the Priority Queue 408. After the tag (for the selected packet) has been removed from the corresponding stream FIFO 404, the priority of the next tag must be examined. If there are no other tags contained within the FIFO 404 at 722, then the entry for this stream in the Priority Queue 708 must be removed at 724. If the FIFO 404 is not empty, and the priority that is specified by the next tag is the same as the priority that was specified by the preceding tag at 726, then nothing else needs to be done. This can be a frequent case when processing an MPEG stream since an MPEG access unit typically is comprised of a large number of packets having equal priority. However, if the FIFO 404 is not empty and the priority that is specified by the next tag is not the same as the priority specified by the preceding tag at 726, then the corresponding entry for this stream in the Priority Queue 408 should be repositioned to maintain the proper sequencing based on decreasing priority.

The exemplary method for classifying and scheduling packets according to a priority system illustrated in Figure 4 generally relates to an exemplary system where each stream is statically allocated to a single RF channel.

But it is also within the scope of the present invention to provide an exemplary system, such as a CMTS or other channel formatting device, that dynamically alters the assignment of streams (from one communication channel to another communication channel), in such a way as to optimize the usage of channel resources. One of the reasons that such stream reassignments can be economically introduced into a cable modem network is that some provisions for dynamic frequency changes have already been adopted into version 1.1 of the Data-Over-Cable Service Interface Specification ("DOCSIS") cable modem standard. That is, cable modems that have been certified to be compliant with DOCSIS 1.1. are not only able to receive commands instructing them to retune to a different RF channel, but they are also able to complete the retuning process without undergoing lengthy resynchronization steps that would render the receiver unusable for a significant period of time. But even DOCSIS 1.1 does not specify that the channel hop be entirely seamless.

Typically, some packets would be lost during the interval when the cable modem is retuning or in the process of acquiring the signal on the new channel, or some packets would be received twice or out of sequence if the CMTS chooses to replicate the same packets on both RF channels while the transition is taking place. Fortunately, this is not a serious problem for most Internet access applications where the TCP protocol is used to detect and correct errors such as these. Unfortunately, this solution does not work well for real time video and audio streams. Delays, such as those due to the retuning and resynchronization of the receiver, or due to the requests for retransmission after uncorrectable errors or losses are detected, can lead to visible and audible errors followed by additional delays during subsequent attempts at resynchronization.

An aspect of the present invention is to provide additional mechanisms for controlling the transition from one communication channel to another communication channel, both of which may or may not be an RF channel. In one embodiment, these additional mechanisms are combined with the operation of Packet Classifier 402 of Figure 4 which assigns a priority value to each of the incoming packets. According to one embodiment, an exemplary method of assigning priority is illustrated in Figure 5 for an exemplary Packet Classifier. In the case of packets corresponding to real-time streams, the priority can be defined as the latest possible time that the packet could arrive at the receiver, as described in connection with Figure 5. But according to another embodiment of the present invention, a modification to this priority deadline as described therein is effectuated to prepare various streams for dynamic reassignments to different RF channels. Although one possible modification, which converts an initial priority ("*P*") to a new priority ("*P*' "), is described as follows, other similar modifications are within the scope and spirit of the present invention.

The first purpose of this exemplary modification is to provide a method for identifying when an RF channel has become over-utilized to the point that there is a short-term risk of being unable to deliver some of the packets in time to avoid disrupting the process of real-time playback at the receiver. The second purpose of the modification is to provide a method for alleviating this risk by switching at least one stream from the over-utilized RF channel to another lesser-utilized RF channel. Either or both goals can be realized by applying a conversion to the priorities that are assigned by the Packet Classifier 402 as shown in Figure 5.

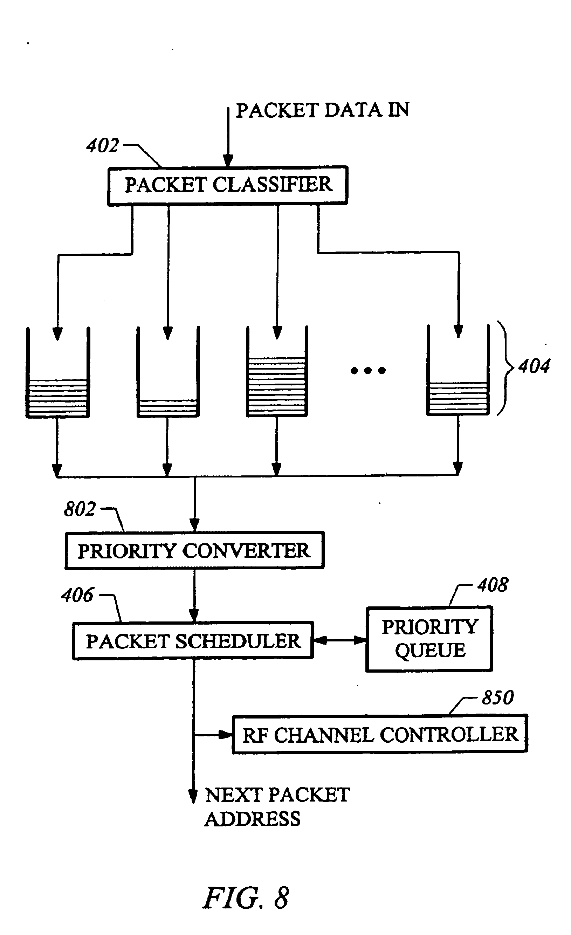

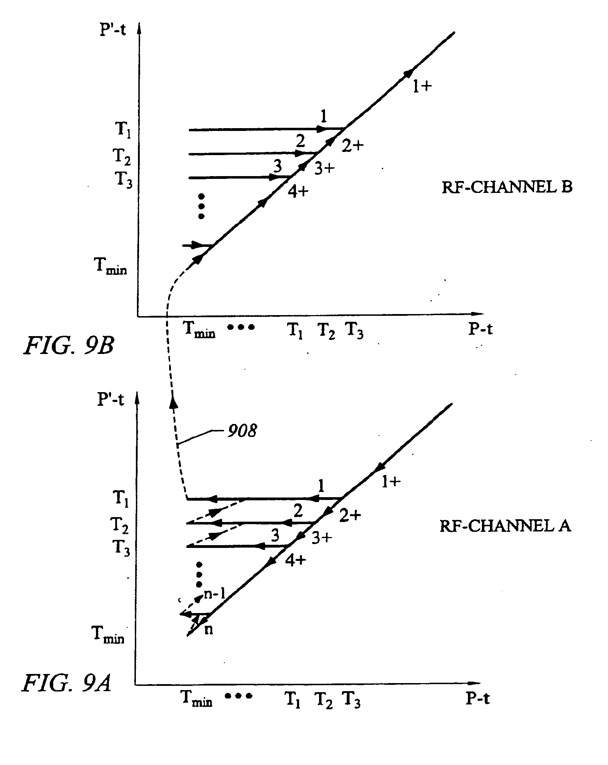

A specific embodiment can be implemented by inserting a Priority Conversion module 802 at the output of the FIFOs 404 prior to the Packet Scheduler 406, as is shown in Figure 8. Examples of the modification performed by the Priority Conversion module 802 are the mapping functions shown in Figures 9A and 9B. Two RF channels are illustrated: RF channel "*A*" in Figure 9A and RF channel "*B*" in Figure 9B. In each case, the horizontal axes represent the difference between the initial priority (*P*) determined by the Packet Classifier 402 and the current time ("*t*"), and the vertical axes represent the difference between the new priority ("*P*' ") and the current time (*t*). Note that the new priority, *P*', is stream-dependent. That is, streams that have been grouped into a particular RF channel are initially sequenced in some arbitrary order and are represented by sequence indexes ranging from 1 to *n* in the case of RF channel *A*, and 1 to *m* in the case of RF channel *B*. The streams that are addressed to the same subscriber are assigned identical indexes. For example, if a subscriber terminal 102 of Figure 1 is simultaneously receiving two programs that are being presented on two different television displays, and one data stream that is supplying Internet data to a personal computer, then a single common index is assigned to the Internet data stream, the two video streams, and any audio and data streams that are associated with each of the two television programs.

It should be noted that in some cases according to the present invention, dynamic channel reassignments (or hops) for a specific stream might be disallowed on certain streams, for example, due to hardware or software limitations of a particular receiver. In such cases, the corresponding streams can be excluded from the group of streams indexed from 1 to *n* (or 1 to *m* for RF channel B). One way to insure that these streams are not selected for channel reassignment is to simply avoid modifying the priority of these excluded streams. That is, new priority *P*' should be set equal to initial priority *P* for each packet that is associated with an excluded stream (i.e., a stream for which dynamic channel hopping capabilities are disabled). On the other hand, if the packet does not correspond to an excluded stream, then the new or modified priority (P') is set equal to the initial priority (*P*) only as long as the initial priority difference (*P-t*) is greater than a predefined threshold *Tₖ*. If the initial priority difference drops below this threshold, then the modified priority difference (*P*'-*t*) is set equal to the threshold. In this particular example, each of the stream classifications is assigned different thresholds ranging from the minimum threshold, "*Tₘᵢₙ*," to the maximum threshold, "*Tₗ*." As the index "*k*" decreases, the threshold *Tₖ* increases.

First, the maximum threshold *Tₗ* is significant. This threshold is typically selected to be at least as large as the time interval needed to implement a channel hop on a corresponding receiver. More precisely, it should be at least as large as the interval that begins when a channel hop command is sent to the targeted receiver and ends when the receiver is capable of receiving packets on the new RF channel. Since the receiver will be unable to receive new packets during this channel retuning interval, the transition should not be initiated if the next packet has a deadline that will expire during the transition. By insuring that the streams with an index of 1 are always assigned a priority that is high enough to maintain a deadline expiration time (*P-t*) of at least *Tₗ*, it should be possible to initiate a channel hop at any time.

Second, the minimum threshold *Tₘᵢₙ* is also significant. If the priority difference (*P-t*) decreases below this threshold, then the current RF channel has become over-utilized to the point where there is a reasonable risk of being unable to deliver all the packets to the intended receivers in time to meet the deadline that is associated with each packet of the real-time streams. This is intuitive for the case where the deadline is the same as the priority *P* that is determined at the Packet Classifier 402 of Figure 8 and the priority difference is the remaining time before the deadline expires. The streams with the lowest priority differences are the ones with the highest index and these should be the first streams to reach their respective thresholds. In this example, the priority differences are assumed to be decreasing for each of the streams in RF channel *A*. This is indicated by the direction of the arrows in Figure 9A.

Before a channel hop can be initiated, the RF channel that is best able to accept the streams with index 1 must be identified. Generally, the best selection is the channel that is currently maintaining the longest expiration deadlines (*P-t*) on the streams with the highest index, or equivalently, the streams that cannot be selected for channel reassignments. These are the "excluded streams" that bypass the priority thresholding process. In this example, RF channel *B* has been selected to accept the streams that are reassigned from other RF channels including RF channel *A*. It should be noted that the designation is only temporary and should be re-evaluated at regular intervals and after each channel hop occurrence.

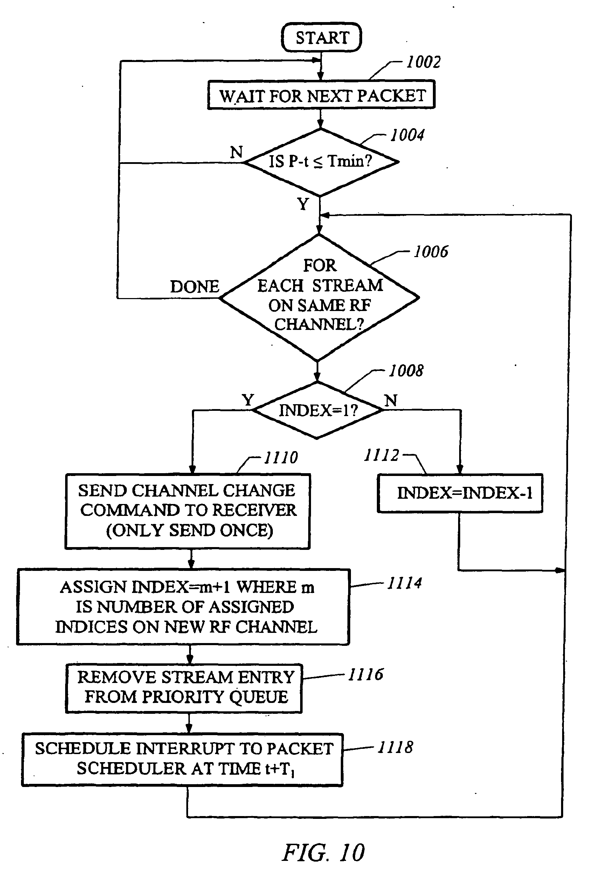

In accordance with a specific embodiment of the present invention, the RF Channel Controller 850 module of Figure 8 is designed to control channel hops and is described in more detail in Figure 10. The decision at 1002 to initiate a channel hop is made when the priority difference at 1004 becomes less than or equal to *Tₘᵢₙ* on any of the real-time streams. In some implementations it may be desirable to protect against instabilities that could be triggered by equipment malfunctions or other system failures. One way to do this is by checking for consistent changes in the priority difference values on any stream that is to be used to trigger a channel transition.

When a stream is to be reassigned, a channel hop command, including the new RF frequency information, is sent to the receiver corresponding to the streams with index 1 as determined at 1008. As mentioned previously, the DOCSIS 1.1 standard allows for dynamic channel hops and the format of the channel hop command is included in the specification. Once the channel hop command has been sent at 1110, RF Channel Controller 850 reassigns the streams from index 1 of the current RF channel to the next highest available index on the new RF channel. For example, if the existing streams on the new RF channel ranged from 1 to *m*, then the streams would be assigned, as conceptually shown by 908, to an index of *m*+1 at 1114. The RF Channel Controller 850 should also ensure that no packets are transmitted for these streams on this new RF channel until one of two conditions is met. Either: (1) a fixed time interval *T_{f}* should expire, or (2) the receiver corresponding to these streams should report back that it is ready to receive packets on this new channel. In Figure 10, this constraint on packet transmission is implemented by removing the entries at 1116 in the Priority Queue corresponding to each stream that is to be reassigned. This ensures that packets will not be selected from any of these streams. At the same time, an interrupt to the Packet Scheduler 406 is set at 1118 to occur after the interval *T_{f}*. At this time, the entries will be reinserted into the Priority Queue 408 of Figure 8 and sorted according to the priority of the next respective packets. The Packet Scheduler Interrupt process is shown in Figure 6 and was described previously.

The RF Channel Controller 850 must also reassign the indices (e.g., 2 to n) of the remaining streams that are still assigned to the previous RF channel (e.g., channel A). Each such index is simply decremented by 1 at 1112. In this way, the streams having an index of 2 are reassigned an index of 1, and hence are next in line for dynamic channel reassignment. For example, the stream of channel *A* that was associated with *k*=2 before the channel reassignment of stream of *k*=1, now becomes associated with *k*=1. Depending on the precise implementation, it may be necessary to take steps to ensure that a single channel reassignment does not trigger a quick succession of channel reassignments. In one implementation according to a specific embodiment of the invention, the next channel hop is postponed until the streams which were just reassigned an index of 1 have had time to achieve a priority difference (*P-t*) of at least *Tᵢ*. By this time, the system should have adjusted to the reassignment of the last stream having index 1, and therefore a second channel hop should not be necessary.

An alternate implementation according to another specific embodiment of the invention is particularly effective. Instead of comparing a threshold *Tₖ* to the priority difference (*P-t*) of a packet at a current time, the RF Channel Controller 850 might instead compare the threshold *Tₖ* to the priority difference at some time in the future (for example at time *t*+*Tₘᵢₙ*). Assuming that the throughput of a fully utilized channel can be constant, a person having ordinary skill in the art should be able to determine the number of packets that will have been transmitted by the time that a fixed interval has expired. Furthermore, since priorities have already been assigned to each packet that has been examined by the Packet Classifier 402, it is possible to anticipate which packets will have been sent by the end of the time interval, and which packets will remain in the queue. Therefore, the overall utilization of the channel at this time in the future can be determined simply by observing the priority difference (*P-t*) of these next packets corresponding to the tags in Priority Queue 408.

One of the advantages to anticipating the channel loading at a future instant in time is that the effect of a dynamic channel reassignment becomes apparent. If one or more streams are excluded from the extrapolation of the scheduling process, then additional packets of the remaining streams will be transmitted during the extrapolation interval, and therefore larger priority differences (*P-t*) will be realized once the interval has expired. It is therefore unlikely that a second channel reassignment will be needed unless packets continue to arrive at a rate exceeding the throughput of the channel.

The method that has been described for reading packets from a central memory unit and using a Packet Classifier to assign corresponding packet tags to a plurality of *FIFO*s and using a Packet Scheduler to read the packet tags and output the packets to the CMTS channel formatter has two important advantages. First, the video, audio, and data packets are prioritized in an optimal way that insures that packets are delivered in time to avoid disrupting the presentation of real-time video and audio while minimizing latency on all other streams. Second, the prioritization and scheduling processes are computationally efficient. The Priority Queue maintains an up-to-date list of the different streams sorted according to priority, and the entries only need to be adjusted on a relatively infrequent basis. This makes it possible to use a single inexpensive processor to manage the sorting and scheduling process for a large number of RF channels.

Additional efficiencies are gained by the use of a dynamic channel allocation policy. Methods and apparatus for managing the streams of each available communication channel and periodically selecting, preparing, and reassigning certain streams from one communication channel to another communication channel, have been described.

An embodiment of the present invention relates to a computer storage product with a computer-readable medium having computer code thereon for performing various computer-implemented operations. The media and computer code may be those specially designed and constructed for the purposes of the present invention, or they may be of the kind well known and available to those having skill in the computer software arts. Examples of computer-readable media include, but are not limited to: magnetic media such as hard disks, floppy disks, and magnetic tape; optical media such as CD-ROMs and homographic devices; magneto-optical media such as floptical disks; and hardware devices that are specially configured to store and execute program code, such as application-specific integrated circuits ("ASICs"), programmable logic devices ("PLDs") and ROM and RAM devices. Examples of computer code include machine code, such as produced by a compiler, and files containing higher-level code that are executed by a computer using an interpreter.. For example, an embodiment of the invention may be implemented using XML, Java, C++, or other object-oriented programming language and development tools. Another embodiment of the invention may be implemented in hardwired circuitry in place of, or in combination with, machine-executable software instructions.

In conclusion the present invention provides, among other things, a system and method for dynamic channel mapping and optimized scheduling of datapackets. Those skilled in the art can readily recognize that numerous variations and substitutions may be made in the invention, its use and its configuration to achieve substantially the same results as achieved by the embodiments described herein.
Accordingly, there is no intention to limit the invention to the disclosed exemplary forms. Many variations, modifications and alternative constructions fall within the scope of the disclosed invention as expressed in the claims.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and describe in order to best explain the principles of the invention and its practical applications, they thereby enable others skilled in the art to best utilize the invention and various embodiments with various modifications as are suited to the particular use contemplated. It is intended that the following claims define the scope of the invention.

## Claims

1. A method of combining a plurality of streams into a plurality of digital multiplexes, wherein each of said digital multiplexes is transmitted over a corresponding communication channel to a plurality of receiving devices, said method comprising:
identifying a first digital multiplex of said plurality of digital multiplexes having a first amount of data that is being transmitted over a first communication channel, where said first amount exceeds a first threshold for said first communication channel;
identifying a second digital multiplex of said plurality of digital multiplexes having a second amount of data that is being transmitted over a second communication channel, where said second amount does not exceed a second threshold for said second communication channel;
selecting a subset of said plurality of streams being transmitted over said first digital multiplex; and
reassigning said subset to said second digital multiplex.

2. The method of claim 1 further comprising notifying at least one receiving device of said plurality of receiving devices to retune from said first communication channel to said second communication channel.

3. The method of claim 1 or 2 wherein said first threshold and said second threshold are set to control data loss associated with said first communication channel and said second communication channels, respectively.

4. The method of one of claims 1 to 3 wherein said reassigning step includes:
causing said subset to no longer be included in said first digital multiplex;
delaying transmission of the streams in said subset; and
causing said subset to be included in said second digital multiplex.

5. The method of claim 4 wherein said delaying step comprises delaying said subset for an interval that is at least as long as an interval during which said at least one receiving device retunes from said first communication channel to said second communication channel.

6. The method of claim 5 further comprising:
prioritizing each of said plurality of streams;
for each of said first and second digital multiplexes, choosing a stream that has the highest priority relative to other streams of said digital multiplex; and
transmitting a next packet of each chosen stream corresponding to each of said digital multiplexes.

7. The method of one of claims 1 to 6 further comprising determining a deadline for a next packet for each of said subset of streams that are to be reassigned from said first digital multiplex to said second digital multiplex.

8. The method of claim 7, wherein a relatively higher priority is assigned to said subset of streams until a time remaining before said deadline is at least as long as an interval needed for retuning said at least one receiving device from said first communication channel to said second communication channel.

9. The method of one of claims 1 to 8 wherein said first and said second communication channels are radio frequency channels, each having different center frequencies.

10. Apparatus for combining a plurality of streams into a plurality of digital multiplexes, wherein each of said digital multiplexes is transmitted over a corresponding communication channel to a plurality of receiving devices, comprising:
means (402, 802) for identifying a first digital multiplex of said plurality of digital multiplexes having a first amount of data that is being transmitted over a first communication channel, where said first amount exceeds a first threshold for said first communication channel;
means (402, 802) for identifying a second digital multiplex of said plurality of digital multiplexes having a second amount of data that is being transmitted over a second communication channel, where said second amount does not exceed a second threshold for said second communication channel;
means (850) for selecting a subset of said plurality of streams being transmitted over said first digital multiplex; and
means (850) for reassigning said subset to said second digital multiplex.

11. The apparatus of claim 10, further comprising means (850) for notifying at least one receiving device (102) of said plurality of receiving devices (102) to retune from said first communication channel to said second communication channel.

12. The apparatus of one of claims 10 or 11, wherein said first threshold and said second threshold are set to control data loss associated with said first communication channel and said second communication channels, respectively.

13. The apparatus of one of claims 10 to 12, wherein said reassigning step includes:
causing said subset to no longer be included in said first digital multiplex;
delaying transmission of the streams in said subset; and
casing said subset to be included in said second digital multiplex.

14. The apparatus of claim 13, wherein said delaying step comprises delaying said subset for an interval that is at least as long as an interval during which said at least one receiving device (102) retunes from said first communication channel to said second communication channel.

15. The apparatus of claim 14, further comprising:
means (402, 802) for prioritizing each of said plurality of streams;
means (802) for choosing, for each of said first and second digital multiplexes, a stream that has the highest priority relative to other streams of said corresponding first or second digital multiplex; and
means (206) for transmitting a next packet of each chosen stream corresponding to each of said digital multiplexes.

16. The apparatus of one of claims 10 to 15, wherein a deadline is determined for a next packet for each of said subset of streams that are to be reassigned from said first digital multiplex to said second digital multiplex.

17. The apparatus of claim 16, wherein a relatively higher priority is assigned to said subset of streams until a time remaining before said deadline is at least as long as an interval needed for retuning said at least one receiving device (102) from said first communication channel to said second communication channel.

18. The apparatus of one of claims 10 to 17, wherein said first and said second communication channels are radio frequency channels, each having different center frequencies.

## Patentansprüche

1. Verfahren zum Kombinieren einer Mehrzahl von Strömen zu einer Mehrzahl von digitalen Multiplexen, wobei jeder der digitalen Multiplexe über einen korrespondierenden Kommunikationskanal zu einer Mehrzahl von Empfangseinrichtungen übertragen wird, wobei das Verfahren umfasst:
Identifizieren eines ersten digitalen Multiplex von der Mehrzahl von digitalen Multiplexen mit einer ersten Menge an Daten, welche über einen ersten Kommunikationskanal übertragen werden, wobei die erste Menge eine erste Schwelle für den ersten Kommunikationskanal überschreitet;
Identifizieren eines zweiten digitalen Multiplex von der Mehrzahl von digitalen Multiplexen mit einer zweiten Menge an Daten, welche über einen zweiten Kommunikationskanal übertragen werden, wobei die zweite Menge eine zweite Schwelle für den zweiten Kommunikationskanal nicht überschreitet;
Selektieren eines Subsets von der Mehrzahl von Strömen, welche über den ersten digitalen Multiplex übertragen werden; und
Neuzuordnen des Subsets zu dem zweiten digitalen Multiplex.

2. Verfahren nach Anspruch 1, ferner umfassend: Benachrichtigen mindestens einer Empfangseinrichtung von der Mehrzahl von Empfangseinrichtungen, um von dem ersten Kommunikationskanal auf den zweiten Kommunikationskanal umzustimmen.

3. Verfahren nach Anspruch 1 oder 2, wobei die erste Schwelle und die zweite Schwelle gesetzt werden, um mit dem ersten Kommunikationskanal und mit dem zweiten Kommunikationskanal assoziierten Datenverlust zu kontrollieren.

4. Verfahren nach einem der Ansprüche 1 bis 3, wobei der Neuzuordnungsschritt umfasst:
Bewirken, dass das Subset nicht mehr in dem ersten digitalen Multiplex enthalten ist;
Verzögern der Übertragung der Ströme in dem Subset; und
Bewirken, dass das Subset in dem zweiten digitalen Multiplex enthalten ist.

5. Verfahren nach Anspruch 4, wobei der Verzögerungsschritt umfasst:
Verzögern des Subsets um ein Intervall, welches mindestens so lang ist wie ein Intervall, während dem die mindestens eine Empfangseinrichtung von dem ersten Kommunikationskanal auf den zweiten Kommunikationskanal umstimmt.

6. Verfahren nach Anspruch 5, ferner umfassend:
Priorisieren jedes der Mehrzahl von Strömen;
für jeden, den ersten und den zweiten, digitalen Multiplex: Wählen eines Stroms, der die höchste Priorität relativ zu anderen Strömen des digitalen Multiplex aufweist; und
Übertragen eines nächsten Pakets von jedem gewählten Strom korrespondierend zu jedem der digitalen Multiplexe.

7. Verfahren nach einem der Ansprüche 1 bis 6, ferner umfassend: Bestimmen einer Deadline für ein nächstes Paket für jedes der Subsets von Strömen, welche von dem ersten digitalen Multiplex zu dem zweiten digitalen Multiplex neuzuzuordnen sind.

8. Verfahren nach Anspruch 7, wobei eine relativ höhere Priorität zu dem Subset von Strömen zugeordnet wird, bis eine verbleibende Zeit vor der Deadline mindestens so lang ist wie ein zum Umstimmen der mindestens einen Empfangseinrichtung von dem ersten Kommunikationskanal auf den zweiten Kommunikationskanal benötigtes Intervall.

9. Verfahren nach einem der Ansprüche 1 bis 8, wobei der erste und der zweite Kommunikationskanal Radiofrequenzkanäle sind, jeweils mit verschiedenen Mittenfrequenzen.

10. Vorrichtung zum Kombinieren einer Mehrzahl von Strömen zu einer Mehrzahl von digitalen Multiplexen, wobei jeder der digitalen Multiplexe über einen korrespondierenden Kommunikationskanal zu einer Mehrzahl von Empfangseinrichtungen übertragen wird, umfassend:
Mittel (402, 802) zum Identifizieren eines ersten digitalen Multiplex von der Mehrzahl von digitalen Multiplexen mit einer ersten Menge an Daten, welche über einen ersten Kommunikationskanal übertragen werden, wobei die erste Menge eine erste Schwelle für den ersten Kommunikationskanal überschreitet;
Mittel (402, 802) zum Identifizieren eines zweiten digitalen Multiplex von der Mehrzahl von digitalen Multiplexen mit einer zweiten Menge an Daten, welche über einen zweiten Kommunikationskanal übertragen werden, wobei die zweite Menge eine zweite Schwelle für den zweiten Kommunikationskanal nicht überschreitet;
Mittel (850) zum Selektieren eines Subsets von der Mehrzahl von Strömen, welche über den ersten digitalen Multiplex übertragen werden; und
Mittel (850) zum Neuzuordnen des Subsets zu dem zweiten digitalen Multiplex.

11. Vorrichtung nach Anspruch 10, ferner umfassend Mittel (850) zum Benachrichtigen mindestens einer Empfangseinrichtung (102) von der Mehrzahl von Empfangseinrichtungen (102), um von dem ersten Kommunikationskanal auf den zweiten Kommunikationskanal umzustimmen.

12. Vorrichtung nach einem der Ansprüche 10 oder 11, wobei die erste Schwelle und die zweite Schwelle gesetzt sind, mit dem ersten Kommunikationskanal und mit dem zweiten Kommunikationskanal assoziierten Datenverlust zu kontrollieren.

13. Vorrichtung nach einem der Ansprüche 10 bis 12, wobei der Neuzuordnungsschritt umfasst:
Bewirken, dass das Subset nicht mehr in dem ersten digitalen Multiplex enthalten ist;
Verzögern der Übertragung der Ströme in dem Subset; und
Bewirken, dass das Subset in dem zweiten digitalen Multiplex enthalten ist.

14. Vorrichtung nach Anspruch 13, wobei der Verzögerungsschritt umfasst:
Verzögern des Subsets um ein Intervall, welches mindestens so lang ist wie ein Intervall, während dem die mindestens eine Empfangseinrichtung (102) von dem ersten Kommunikationskanal auf den zweiten Kommunikationskanal umstimmt.

15. Vorrichtung nach Anspruch 14, ferner umfassend:
Mittel (402, 802) zum Priorisieren jedes der Mehrzahl von Strömen;
Mittel (802) zum Wählen - für jeden, den ersten und den zweiten, digitalen Multiplex - eines Stroms, der die höchste Priorität relativ zu anderen Strömen des korrespondierenden ersten oder zweiten digitalen Multiplex aufweist; und
Mittel (206) zum Übertragen eines nächsten Pakets von jedem gewählten Strom korrespondierend zu jedem der digitalen Multiplexe.

16. Vorrichtung nach einem der Ansprüche 10 bis 15, wobei eine Deadline für ein nächstes Paket für jedes der Subsets von Strömen, welche von dem ersten digitalen Multiplex zu dem zweiten digitalen Multiplex neuzuzuordnen sind, bestimmt wird.

17. Vorrichtung nach Anspruch 16, wobei eine relativ höhere Priorität zu dem Subset von Strömen zugeordnet wird, bis eine verbleibende Zeit vor der Deadline mindestens so lang ist wie ein zum Umstimmen der mindestens einen Empfangseinrichtung (102) von dem ersten Kommunikationskanal auf den zweiten Kommunikationskanal benötigtes Intervall.

18. Vorrichtung nach einem der Ansprüche 10 bis 17, wobei der erste und der zweite Kommunikationskanal Radiofrequenzkanäle sind, jeweils mit verschiedenen Mittenfrequenzen.

## Revendications

1. Procédé pour combiner une pluralité de trains de bits en une pluralité de multiplex numériques, dans lequel chacun desdits multiplex numériques est transmis sur un canal de communication correspondant vers une pluralité de dispositifs de réception, ledit procédé comprenant les étapes consistant à :
identifier un premier multiplex numérique parmi ladite pluralité de multiplex numériques ayant une première quantité de données qui est transmise sur un premier canal de communication, ladite première quantité dépassant un premier seuil pour ledit premier canal de communication ;
identifier un second multiplex numérique parmi ladite pluralité de multiplex numériques ayant une seconde quantité de données qui est transmise sur un second canal de communication, ladite seconde quantité ne dépassant pas un second seuil pour ledit second canal de communication ;
sélectionner un sous-ensemble parmi ladite pluralité de trains de bits transmis sur ledit premier multiplex numérique ; et
réattribuer ledit sous-ensemble audit second multiplex numérique.

2. Procédé selon la revendication 1, comprenant en outre l'étape consistant à demander à au moins un dispositif de réception parmi ladite pluralité de dispositifs de réception de se resyntoniser depuis ledit premier canal de communication vers ledit second canal de communication.

3. Procédé selon la revendication 1 ou 2, dans lequel ledit premier seuil et ledit second seuil sont établis pour contrôler une perte de données associée audit premier canal de communication et auxdits seconds canaux de communication, respectivement.

4. Procédé selon l'une des revendications 1 à 3, dans lequel ladite étape de réattribution comprend les étapes consistant à :
amener ledit sous-ensemble à ne plus être inclus dans ledit premier multiplex numérique ;
retarder une transmission des trains de bits dans ledit sous-ensemble ; et
amener ledit sous-ensemble à être inclus dans ledit second multiplex numérique.

5. Procédé selon la revendication 4, dans lequel ladite étape de retardement comprend l'opération consistant à retarder ledit sous-ensemble pendant un intervalle qui est au moins aussi long qu'un intervalle pendant lequel ledit au moins un dispositif de réception se resyntonise depuis ledit premier canal de communication vers ledit second canal de communication.

6. Procédé selon la revendication 5, comprenant en outre les étapes consistant à :
hiérarchiser chacun parmi ladite pluralité de trains de bits ;
pour chacun desdits premier et second multiplex, choisir un train de bits qui a la priorité la plus élevée par rapport à d'autres trains de bits dudit multiplex numérique ; et
transmettre un paquet suivant de chaque train de bits choisi correspondant à chacun desdits multiplex numériques.

7. Procédé selon l'une des revendications 1 à 6, comprenant en outre la détermination d'un délai pour un paquet suivant pour chacun parmi ledit sous-ensemble de trains de bits qui doivent être réattribués depuis ledit premier multiplex numérique vers ledit second multiplex numérique.

8. Procédé selon la revendication 7, dans lequel une priorité relativement supérieure est attribuée audit sous-ensemble de trains de bits jusqu'à ce que le temps restant avant ledit délai soit au moins aussi long qu'un intervalle nécessaire pour resyntoniser ledit au moins un dispositif de réception depuis ledit premier canal de communication vers ledit second canal de communication.

9. Procédé selon l'une des revendications 1 à 8, dans lequel lesdits premier et second canaux de communication sont des canaux radiofréquence, chacun ayant différentes fréquences centrales.

10. Appareil pour combiner une pluralité de trains de bits en une pluralité de multiplex numériques, dans lequel chacun desdits multiplex numériques est transmis sur un canal de communication correspondant vers une pluralité de dispositifs de réception, comprenant :
des moyens (402, 802) pour identifier un premier multiplex numérique parmi ladite pluralité de multiplex numériques ayant une première quantité de données qui est transmise sur un premier canal de communication, ladite première quantité dépassant un premier seuil pour ledit premier canal de communication ;
des moyens (402, 802) pour identifier un second multiplex numérique parmi ladite pluralité de multiplex numériques ayant une seconde quantité de données qui est transmise sur un second canal de communication, ladite seconde quantité ne dépassant pas un second seuil pour ledit second canal de communication ;
des moyens (850) pour sélectionner un sous-ensemble parmi ladite pluralité de trains de bits transmis sur ledit premier multiplex numérique ; et
des moyens (850) pour réattribuer ledit sous-ensemble audit second multiplex numérique.

11. Appareil selon la revendication 10, comprenant en outre des moyens (850) pour demander à au moins un dispositif de réception (102) parmi ladite pluralité de dispositifs de réception (102) de se resyntoniser depuis ledit premier canal de communication vers ledit second canal de communication.

12. Appareil selon l'une des revendications 10 ou 11, dans lequel ledit premier seuil et ledit second seuil sont établis pour contrôler une perte de données associée audit premier canal de communication et auxdits seconds canaux de communication, respectivement.

13. Appareil selon l'une des revendications 10 à 12, dans lequel ladite étape de réattribution comprend les étapes consistant à :
amener ledit sous-ensemble à ne plus être inclus dans ledit premier multiplex numérique ;
retarder une transmission des trains de bits dans ledit sous-ensemble ; et
amener ledit sous-ensemble à être inclus dans ledit second multiplex numérique.

14. Appareil selon la revendication 13, dans lequel ladite étape de retardement comprend l'opération consistant à retarder ledit sous-ensemble pendant un intervalle qui est au moins aussi long qu'un intervalle pendant lequel ledit au moins un dispositif de réception (102) se resyntonise depuis ledit premier canal de communication vers ledit second canal de communication.

15. Appareil selon la revendication 14, comprenant en outre :
des moyens (402, 802) pour hiérarchiser chacun parmi ladite pluralité de train de bits ;
des moyens (802) pour choisir, pour chacun desdits premier et second multiplex numériques, un train de bits qui a la priorité la plus élevée par rapport à d'autre train de bits dudit premier ou dudit second multiplex numérique correspondant ; et
des moyens (206) pour transmettre un paquet suivant de chaque train de bits choisi correspondant à chacun desdits multiplex numériques.

16. Appareil selon l'une des revendications 10 à 15, dans lequel un délai est déterminé pour un paquet suivant pour chacun parmi ledit sous-ensemble de trains de bits qui doivent être réattribués depuis ledit premier multiplex numérique vers ledit second multiplex numérique.

17. Appareil selon la revendication 16, dans lequel une priorité relativement supérieure est attribuée audit sous-ensemble de trains de bits jusqu'à ce que le temps restant avant ledit délai soit au moins aussi long qu'un intervalle nécessaire pour resyntoniser ledit au moins un dispositif de réception (102) depuis ledit premier canal de communication vers ledit second canal de communication.

18. Appareil selon l'une des revendications 10 à 17, dans lequel lesdits premier et second canaux de communication sont des canaux radiofréquence, chacun ayant différentes fréquences centrales.
